# FASCICULE DE BREVET EUROPEEN

(11) **EP 3 350 483 B1**
(45) Date de publication et mention de la délivrance du brevet: **13.11.2019**
(21) Numéro de dépôt: 16775308.6
(22) Date de dépôt: 13.09.2016
(51) Int. Cl.: F16H 57/04, F16H 1/16, F16H 55/17

(54) **RÉDUCTEUR À ENGRENAGE AVEC GRAISSEUR INTÉGRÉ POUR DIRECTION ASSISTÉE**
UNTERSETZUNGSGETRIEBE MIT EINGEBAUTER SCHMIERVORRICHTUNG FÜR SERVOLENKUNG
REDUCTION GEAR WITH BUILT-IN LUBRICATOR FOR POWER STEERING

(30) Priorité: 16.09.2015 FR 1558698
(43) Date de publication de la demande: 25.07.2018
(73) Titulaire: JTEKT Europe, 69540 Irigny (FR)
(72) Inventeur: REY, Laurent, 69100 Villeurbanne (FR)
(74) Mandataire: Chevalier, Renaud Philippe
(86) Numéro de dépôt international: PCT/FR2016/052305
(87) Numéro de publication internationale: WO 2017/046508

(56) Documents cités:
- EP-A1- 0 163 985
- WO-A1-2010/031624
- JP-A- 2005 176 527

## Description

La présente invention se rapporte au domaine général des mécanismes à roue, au sein desquels au moins une roue, par exemple une roue dentée, est montée mobile en rotation à l'intérieur d'un carter.

La présente invention concerne plus particulièrement les mécanismes à engrenage, tels que les réducteurs à roue tangente et vis sans fin, qui peuvent être par exemple utilisés dans des systèmes de direction assistée pour véhicules.

Au sein de tels mécanismes, il est connu d'utiliser un lubrifiant, et notamment de la graisse, afin de réduire les frottements, les bruits de fonctionnement, et les phénomènes d'usure qui affectent les différents organes constitutifs du mécanisme, dont la roue, mais également pour assurer une certaine protection desdits organes constitutifs du mécanisme contre la corrosion.

En pratique, la présence permanente de lubrifiant est vivement souhaitable dans les zones où les organes du mécanisme sont fortement sollicités, et par exemple dans les zones d'engrènement au niveau desquelles un pignon ou une vis sans fin vient en prise sur la roue.

Or, en raison des mouvements relatifs des pièces et des contraintes de pression qui règnent dans une zone d'engrènement, la graisse tend généralement à être chassée de ladite zone d'engrènement, et à s'accumuler dans une autre zone, non fonctionnelle, du mécanisme.

Bien entendu, lorsque la zone d'engrènement, et plus particulièrement les surfaces d'engrènement des dents de la roue, perdent progressivement tout ou partie de leur graisse, le mécanisme peut devenir davantage sujet à l'encrassement, au frottement, à l'usure, voire au grippage, ce qui peut dégrader son efficacité et réduire sa durée de vie.

Le problème se pose en particulier pour les mécanismes scellés à vie, au sein desquels le carter, une fois fermé de façon étanche, n'est plus destiné à être ouvert, si bien qu'il n'est en principe plus possible d'accéder au mécanisme, et notamment à la roue, ce qui empêche de procéder à des opérations périodiques d'entretien, et notamment à des opérations périodiques de graissage.

Une telle situation peut notamment se présenter lorsque le coût d'une intervention sur le mécanisme est prohibitif, ou bien lorsqu'il est nécessaire, par exemple pour la sécurité de l'utilisateur, de préserver de toute modification le mécanisme et ses réglages fonctionnels, notamment lorsque ledit mécanisme renferme des capteurs dont l'étalonnage est complexe.

Le document de brevet JP 2005176527 décrit un mécanisme comprenant au moins une roue qui est montée mobile en rotation, selon au moins un premier sens de rotation, autour d'un axe de rotation, dans un carter contenant un lubrifiant, tel que de la graisse, ladite roue étant délimitée radialement par une jante périphérique et axialement par au moins un premier flanc de roue, annulaire, sécant à l'axe de rotation, et qui borde ladite jante, tandis que le carter forme, autour de l'axe de rotation et en vis-à-vis du premier flanc de roue, une couronne de couverture, annulaire, sécante à l'axe de rotation, et qui chevauche radialement ledit premier flanc de roue.

Les objets assignés à l'invention visent donc à remédier aux inconvénients susmentionnés et à proposer un nouveau type de mécanisme à roue au sein duquel on assure en permanence, durablement, de façon simple, et à moindre coût, une lubrification particulièrement efficace.

Les objets assignés à l'invention sont atteints au moyen d'un mécanisme comprenant au moins une roue qui est montée mobile en rotation, selon au moins un premier sens de rotation, autour d'un axe de rotation (ZZ'), dans un carter contenant un lubrifiant, tel que de la graisse, ladite roue étant délimitée radialement par une jante périphérique et axialement par au moins un premier flanc de roue, annulaire, sécant à l'axe de rotation (ZZ'), et qui borde ladite jante, tandis que le carter forme, autour de l'axe de rotation (ZZ') et en vis-à-vis du premier flanc de roue, une couronne de couverture, annulaire, sécante à l'axe de rotation (ZZ'), et qui chevauche radialement ledit premier flanc de roue, ledit mécanisme étant caractérisé en ce que la roue comporte au moins une aube qui fait saillie axialement sur le premier flanc de roue, en direction de la couronne de couverture, tandis que le carter comporte au moins un déflecteur qui fait saillie axialement sur la couronne de couverture, en direction du premier flanc de roue, l'aube et le déflecteur étant agencés de telle sorte que, en projection dans un plan de projection normal à l'axe de rotation (ZZ'), l'aube présente, dans le premier sens de rotation, un premier bord d'attaque qui décrit un premier anneau de balayage autour de l'axe de rotation (ZZ'), tandis que le déflecteur présente un bord de retenue qui s'étend au moins en partie à l'intérieur dudit anneau de balayage et dont l'orientation en lacet est différente de celle du premier bord d'attaque, de telle sorte que, lorsque le premier bord d'attaque de l'aube aborde puis survole le bord de retenue du déflecteur dans le premier sens de rotation, le point d'intersection, fictif, entre le premier bord d'attaque et le bord de retenue se déplace radialement vers la jante, en s'éloignant progressivement de l'axe de rotation (ZZ'), si bien que le mouvement relatif de la roue par rapport au carter dans le premier sens de rotation permet à l'aube et au déflecteur de coopérer pour refouler le lubrifiant vers la jante périphérique.

Avantageusement, l'agencement proposé par l'invention permet d'intégrer directement un graisseur à la structure de base du mécanisme, c'est-à-dire en l'espèce à la roue et au carter, selon une disposition particulièrement simple, légère et compacte, et de tirer profit du mouvement relatif de rotation de la roue par rapport au carter pour forcer une recirculation du lubrifiant vers la zone active du mécanisme, à savoir vers la périphérie de la roue, et plus particulièrement vers la zone d'engrènement où une vis sans fin ou un pignon vient en prise sur la jante.

En effet, lorsque du lubrifiant s'échappe de la zone périphérique de la roue, et plus particulièrement lorsque du lubrifiant est expulsé de la zone d'engrènement, et gagne une zone de la roue radialement plus proche de l'axe de rotation (ZZ'), située au niveau du flanc de roue, dans l'anneau de balayage parcouru par l'aube, alors ce lubrifiant se retrouve cisaillé, lorsque l'aube passe en vis-à-vis du déflecteur, entre d'une part le bord d'attaque de ladite aube, qui pousse et entraîne ledit lubrifiant, et d'autre part le bord de retenue du déflecteur, qui guide et canalise le lubrifiant vers la périphérie de la roue.

L'invention permet ainsi de recueillir ledit lubrifiant qui a migré jusqu'au flanc de roue, et de réacheminer ledit lubrifiant jusqu'à la jante, et plus particulièrement jusqu'à la zone d'engrènement, chaque fois que la roue tourne dans le premier sens de rotation.

A ce titre, on notera que l'agencement proposé par l'invention combine avantageusement, pour déplacer le lubrifiant, d'une part une première composante de déplacement radiale, le lubrifiant étant en effet repoussé radialement, en éloignement de l'axe de rotation (ZZ'), du flanc de la roue jusqu'à la jante, avec d'autre part une seconde composante de déplacement en rotation azimutale (en rotation en lacet), c'est-à-dire avec une composante de déplacement ortho-radiale, qui permet de rabattre le lubrifiant autour de l'axe de rotation (ZZ') jusqu'au secteur angulaire dans lequel se situe la zone d'engrènement.

Grâce à l'agencement proposé par l'invention, qui assure de façon périodique, voire quasi-permanente, la récupération du lubrifiant situé hors de la zone d'engrènement et le renvoi dudit lubrifiant vers la jante, et plus particulièrement vers la zone d'engrènement, on peut sensiblement compenser au fil du temps les déperditions de lubrifiant dues à l'expulsion dudit lubrifiant hors de la zone d'engrènement, et ainsi maintenir durablement une lubrification abondante et efficace de ladite zone d'engrènement.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, un exemple de mécanisme conforme à l'invention.
La figure 2 illustre, selon une vue de détail en coupe sagittale selon l'axe de rotation (ZZ'), une partie du mécanisme de la figure1.
Les figures 3 et 4 illustrent, respectivement selon une vue en perspective et une vue en projection selon l'axe de rotation (ZZ'), une roue pourvue d'aubes selon l'invention, qui équipe le mécanisme des figure 1 et 2.
Les figures 5 et 6 illustrent, respectivement selon une vue en perspective et une vue en projection selon l'axe de rotation (ZZ'), un couvercle de carter pourvu de déflecteurs selon l'invention, qui équipe le mécanisme des figures 1 et 2.
La figure 7 illustre, selon une vue en projection dans un plan de projection normal à l'axe de rotation (ZZ'), le principe de superposition des aubes de la roue avec les déflecteurs du carter au sein du mécanisme des figures 1 et 2.
La figure 8 illustre, selon une vue en perspective, une variante de réalisation d'un couvercle de carter pourvu de déflecteurs.
La figure 9 illustre, selon une vue en perspective, une autre variante de réalisation d'un couvercle de carter pourvu de déflecteurs réunis deux à deux sous la forme de lames recourbées en C.
La figure 10 illustre encore une autre variante de réalisation d'un couvercle de carter pourvu de déflecteurs.

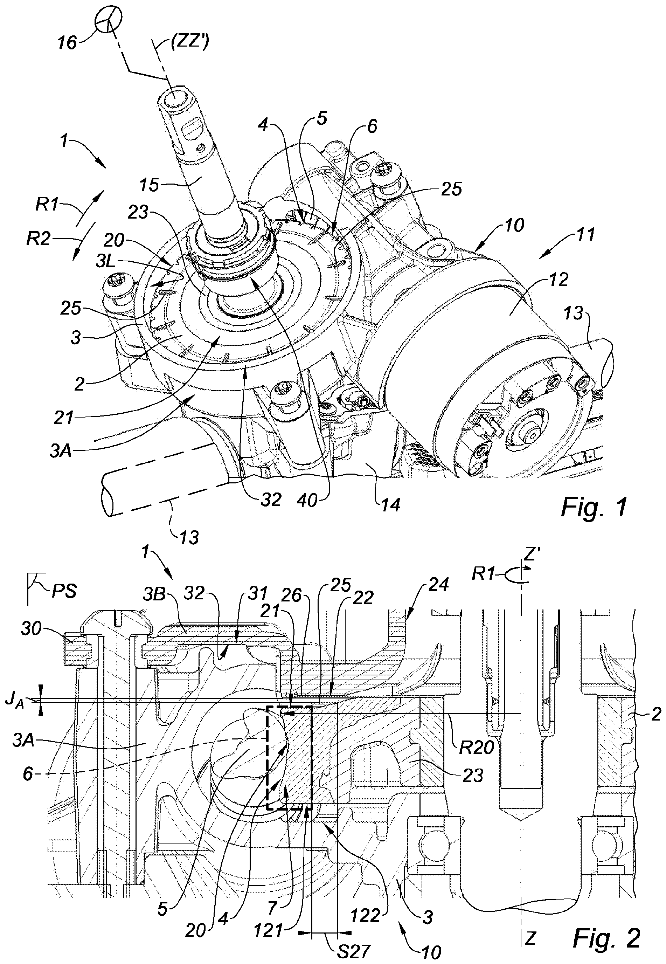

La présente invention concerne un mécanisme 1 qui comprend, tel que cela est illustré sur la figure 1, au moins une roue 2 qui est montée mobile en rotation, selon au moins un premier sens de rotation R1, autour d'un axe de rotation (ZZ'), dans un carter 3 contenant un lubrifiant 4.

De préférence, ledit lubrifiant 4 sera de la graisse, plutôt que de l'huile, afin d'améliorer l'adhérence dudit lubrifiant aux surfaces des organes mobiles du mécanisme, et notamment aux surfaces de la roue 2, et ainsi faciliter le maintien et le renvoi dudit lubrifiant dans les zones fonctionnelles du mécanisme.

A titre purement indicatif, on pourra notamment utiliser une graisse de type graisse à savons épaississants (savons de calcium, de lithium ou de sodium par exemple) qui d'une part présentera une bonne adhérence avec les métaux comme l'acier, et donc le cas échéant une bonne adhérence avec la roue 2 et/ou avec une vis sans fin 5 engrenant sur ladite roue 2, et qui d'autre part ne sera pas agressive chimiquement vis-à-vis des matières plastiques ou métalliques (afin d'éviter toute corrosion ou fissuration de la roue 2, de la vis sans fin 5 et du carter 3).

L'invention est bien entendu applicable à tout type de mécanisme 1, et notamment à tout mécanisme 1 d'entraînement agencé pour assurer une transmission d'effort et de mouvement depuis un organe mobile d'entrée, tel qu'un arbre moteur, vers un organe mobile de sortie, tel qu'un arbre de transmission.

De façon particulièrement préférentielle, le mécanisme 1 sera un mécanisme à engrenage, la roue 2 étant à cet effet une roue dentée, tel que cela est illustré sur les figures 1 à 4.

Selon une variante préférentielle de réalisation, le mécanisme 1 constituera un réducteur à engrenage, et plus particulièrement un réducteur à roue tangente et vis sans fin, au sein duquel la roue 2 est une roue dentée sur laquelle vient engrener une vis sans fin 5, sensiblement tangente à ladite roue 2, tel que cela est illustré sur les figures 1 et 2.

Bien entendu, la roue 2 dentée pourrait tout aussi bien coopérer avec une autre roue dentée, du genre pignon, sans sortir du cadre de l'invention.

On désignera par « zone d'engrènement » 6, schématisée en pointillés sur la figure 2, la zone où la vis sans fin 5 (ou le pignon, le cas échéant) vient en prise contre la roue 2, et engrène au contact des dents 7 de ladite roue 2.

De préférence, tel que cela est illustré sur la figure 1, le mécanisme 1, et plus particulièrement le réducteur, fera partie d'un module d'assistance de direction 10 pour un système de direction assistée 11 destiné à équiper un véhicule, notamment un véhicule automobile.

Le mécanisme 1 pourra ainsi assurer une liaison d'entraînement entre un moteur d'assistance 12, de préférence électrique, piloté par un contrôleur électronique en fonction de lois d'assistance prédéterminées, et une crémaillère de direction 13 guidée en translation dans un carter de direction 14, et dont le déplacement en translation permet de modifier l'angle de braquage (angle de lacet) de roues directrices du véhicule.

A cet effet, l'arbre de sortie du moteur d'assistance 12 sera de préférence porteur de la vis sans fin 5 susmentionnée, qui entraîne la roue 2.

Le carter 3 contenant la roue 2 du mécanisme 1 sera avantageusement fixé au carter de direction 14, voire formé d'un seul tenant avec ledit carter de direction 14, lui-même fixé au châssis du véhicule.

Selon une première possibilité de réalisation, illustrée sur les figures 1 et 2, le système de direction assistée 11 forme un système dit « à simple pignon », au sein duquel la roue 2 du mécanisme 1 est montée sur un arbre qui forme une portion d'une colonne de direction 15, colonne de direction 15 dont une extrémité porte un volant de conduite 16 et l'autre extrémité porte un pignon d'entraînement qui engrène sur la crémaillère 13. Selon une telle configuration à simple pignon, le moteur d'assistance 12 transmet ainsi son effort d'assistance (couple d'assistance) à la crémaillère 13 par l'intermédiaire de la colonne de direction 15.

Selon une autre possibilité de réalisation, le système de direction assistée 11 forme un système dit « à double pignon » au sein duquel la roue 2 du mécanisme 1 est montée sur un arbre qui est distinct de la colonne de direction 15, et qui porte un second pignon dit « pignon d'entraînement motorisé » qui engrène sur la crémaillère 13 à distance d'un premier pignon, dit « pignon d'entraînement manuel », qui est quant à lui porté par la colonne de direction 15 et manœuvré par le volant de conduite 16. Selon une telle configuration à double pignon, le moteur d'assistance 12 agit sur la crémaillère selon une chaîne cinématique distincte de la colonne de direction 15 manuelle.

Bien entendu, l'invention concerne en tant que telle un véhicule, et notamment un véhicule automobile, destiné par exemple au transport de personnes, qui est équipé d'un mécanisme 1 selon l'invention, et plus globalement d'un module de direction assistée 10 voire d'un système de direction assistée 11 selon l'invention.

De préférence, et par convention, on considère que le carter 3 qui accueille la roue 2 forme un élément fixe, en l'espèce fixé au châssis du véhicule, c'est-à-dire un stator du mécanisme 1, tandis que la roue 2 forme un rotor en mouvement relatif par rapport audit carter 3.

Le carter 3 est agencé de sorte à délimiter une enceinte étanche qui contient (au moins) la roue 2, ainsi que la vis sans fin 5, et dans laquelle le lubrifiant 4 est avantageusement confiné, sans possibilité de s'échapper hors du carter 3 en conditions normales de fonctionnement.

A ce titre, on notera que le mécanisme 1 pourra éventuellement constituer un mécanisme scellé à vie, sans entretien, non destiné à être ouvert une fois assemblé.

Le carter 3 (ou le cas échéant ses différentes parties constitutives) pourra être réalisé dans un matériau métallique, notamment dans un alliage léger de type alliage d'aluminium ou alliage de magnésium.

Ceci étant, le carter 3 pourra également être réalisé en tout ou partie dans un matériau plastique (polymère) renforcé de fibres, tel qu'un polyamide chargé de fibres de verre.

La roue 2 pourra quant à elle être réalisée en métal, par exemple en acier, en matériau polymère, par exemple en Poly-oxy-méthylène (POM), Polyamide (PA), Poly-téréphtalate de Butylène (PBT), Polycétone (PK), ou bien encore par une structure composite comprenant par exemple une âme métallique revêtue d'une ou plusieurs couches de matériaux polymères.

Selon l'invention, et tel que cela est bien visible sur la figure 2, la roue 2 est délimitée radialement par une jante périphérique 20 et axialement par au moins un premier flanc de roue 21, annulaire, sécant à l'axe de rotation (ZZ'), et qui borde ladite jante 20, tandis que le carter 3 forme, autour de l'axe de rotation (ZZ') et en vis-à-vis du premier flanc de roue 21, une couronne de couverture 22, annulaire, sécante à l'axe de rotation (ZZ'), et qui chevauche radialement ledit premier flanc de roue 21.

Ainsi, en projection dans un plan de projection P0 perpendiculaire à l'axe de rotation (ZZ'), la couronne de couverture 22 et le premier flanc de roue 21 se superposent selon une étendue radiale non nulle.

Par « axiale », on désigne une direction ou une dimension considérée parallèlement à l'axe de rotation (ZZ'), voire confondue avec ledit axe de rotation (ZZ').

Par « radiale », on désigne une direction ou une dimension considérée perpendiculairement audit axe de rotation (ZZ').

Par convention et par commodité de description, on considérera l'axe de rotation (ZZ') comme étant l'axe de lacet, à partir duquel on pourra repérer, en coordonnées cylindriques, un objet par son rayon (i.e. la distance dudit objet à l'axe de rotation) et par son azimut (i.e. la position angulaire dudit objet autour dudit axe de rotation).

Le premier flanc de roue 21 correspond ici à la face annulaire apparente supérieure de la roue 2, pleine, qui tient lieu de rayons reliant le moyeu 23 de la roue 2 à la jante 20.

A ce titre, on notera que la jante 20 forme, par rapport au premier flanc de roue 21, et à partir du périmètre radialement externe dudit flanc de roue 21, un bord périphérique tombé, de préférence rabattu sensiblement parallèlement à l'axe de rotation (ZZ').

Le premier de flanc de roue 21 pourra être de forme de révolution quelconque, centrée sur l'axe de rotation (ZZ'), et notamment être sensiblement plan, ou bombé, ou bien encore tronconique, pourvu qu'il soit transverse (sécant) à l'axe de rotation (ZZ'), c'est-à-dire non parallèle à ce dernier.

De façon particulièrement préférentielle, notamment par commodité de fabrication de la roue 2, le premier flanc de roue 21 sera sensiblement perpendiculaire à l'axe de rotation (ZZ').

De même, la couronne de couverture 22, qui correspond à une surface interne du carter 3, située axialement en face du premier flanc de roue 21, présentera de préférence une forme sensiblement conjuguée à la forme du premier flanc de roue 21 que ladite couronne 22 recouvre.

En particulier, la couronne de couverture 22 pourra ainsi être sensiblement perpendiculaire à l'axe de rotation (ZZ'), et sensiblement centrée sur ce dernier.

De préférence, la couronne de couverture 22 présentera sensiblement une forme de révolution autour de l'axe de rotation (ZZ').

Ceci étant, toute autre forme de surface appropriée pourra convenir pour la couronne de couverture 22, dès lors que ladite couronne de couverture 22 permet au carter 3 de chevaucher au moins partiellement le premier flanc de roue 21 sur une étendue (radiale) suffisante, et néanmoins sans interférer avec la rotation de la roue 2, pour permettre la mise en œuvre de l'invention.

Lorsque le mécanisme 1 équipe un système de direction assistée 11 à simple pignon, la couronne de couverture 22 sera percée (en son centre), tel que cela est illustré sur les figures 2, 5, 6 et 7, d'un orifice de passage 24 destiné à laisser passer la colonne de direction 15 à travers la paroi du carter 3, c'est-à-dire permettant à la colonne de direction 15, à laquelle la roue 2 est solidarisée en rotation, de pénétrer dans le carter 3 et de traverser ce dernier, selon l'axe de rotation (ZZ').

L'orifice de passage 24 sera avantageusement pourvu d'un organe d'étanchéité, du genre joint à lèvres, interposé radialement entre la colonne de direction 15 et la paroi interne de l'orifice de passage 24, de manière à éviter la fuite de lubrifiant 4 hors du carter 3.

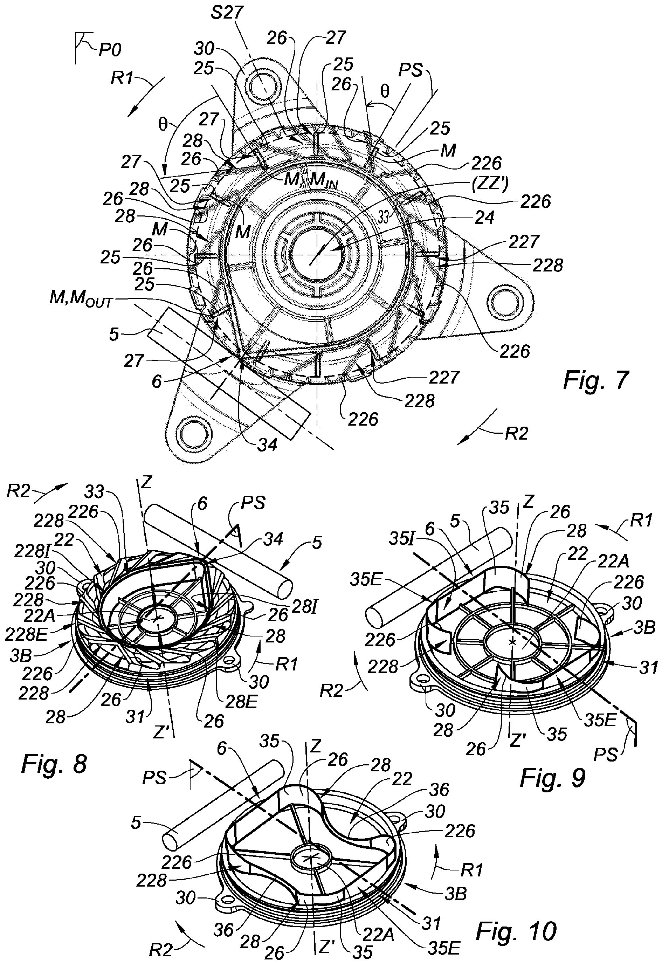

Lorsque le mécanisme 1 équipe un système de direction assistée 11 à double pignon, la couronne de couverture 22 sera au contraire formée par un disque à fond 22A plein, non percé en son centre, qui viendra recouvrir totalement le premier flanc de roue 21, y compris à l'aplomb axial de l'axe de rotation (ZZ'), en formant ainsi une paroi de fond du carter 3, tel que cela est illustré sur les figures 8, 9 et 10.

Selon l'invention, et tel que cela est illustré sur les figures 1 à 4 la roue 2 comporte au moins une aube 25 qui fait saillie axialement sur le premier flanc de roue 21, en direction de la couronne de couverture 22, tandis que le carter 3 comporte au moins un déflecteur 26 qui fait saillie axialement sur la couronne de couverture 22, en direction du premier flanc de roue 21, l'aube 25 et le déflecteur 26 étant agencés de telle sorte que, en projection dans un plan de projection P0 normal à l'axe de rotation (ZZ'), et tel que cela est notamment visible sur la figure 7, l'aube 25 présente, dans le premier sens de rotation R1, un premier bord d'attaque 27 qui décrit un premier anneau de balayage S27 autour de l'axe de rotation (ZZ'), tandis que le déflecteur 26 présente un bord de retenue 28 qui s'étend au moins en partie à l'intérieur dudit anneau de balayage S27 et dont l'orientation en lacet est différente de l'orientation en lacet du premier bord d'attaque 27, de telle sorte que, lorsque le premier bord d'attaque 27 de l'aube 25 aborde puis survole le bord de retenue 28 du déflecteur 26 dans le premier sens de rotation R1, le point d'intersection M, fictif, entre le premier bord d'attaque 27 et le bord de retenue 28 se déplace radialement vers la jante 20, en s'éloignant progressivement de l'axe de rotation (ZZ'), tel que cela est illustré sur la figure 7, si bien que le mouvement relatif de la roue 2 par rapport au carter 3 dans le premier sens de rotation R1 permet à l'aube 25 et au déflecteur 26 de coopérer pour refouler le lubrifiant 4 vers la jante 20 périphérique.

Le premier bord d'attaque 27 correspond, par convention, au bord qui marque la limite amont de l'aube 25 en référence au premier sens de rotation R1, c'est-à-dire au bord latéral qui délimite (ortho-radialement) l'aube 25 et qui se situe en amont de ladite aube 25, et qui par conséquent se présente en premier au déflecteur 26 lorsque l'aube 25 se déplace dans le premier sens de rotation R1.

De même, le bord de retenue 28 du déflecteur 26 correspond au bord qui délimite (ortho-radialement) le déflecteur 26 et par lequel le premier bord d'attaque 27 de l'aube 25 aborde (atteint en premier) ledit déflecteur 26, en projection axiale dans le plan de projection P0, lorsque ladite aube 25 tourne dans le premier sens de rotation R1.

Ledit bord de retenue 28 correspond en pratique à une face (latérale) du déflecteur 26, qui fait obstacle à une libre circulation ortho-radiale du lubrifiant 4 autour de l'axe de rotation (ZZ'), et au contact duquel le lubrifiant 4 est dévié et s'écoule en direction de la jante 20 lorsque ledit lubrifiant 4 est repoussé par l'action de l'aube 25 en mouvement dans le premier sens de rotation R1.

Le bord de retenue 28 forme ainsi une sorte de rampe le long de laquelle le lubrifiant 4 est canalisé et peut ainsi progresser vers et jusqu'à la jante 20.

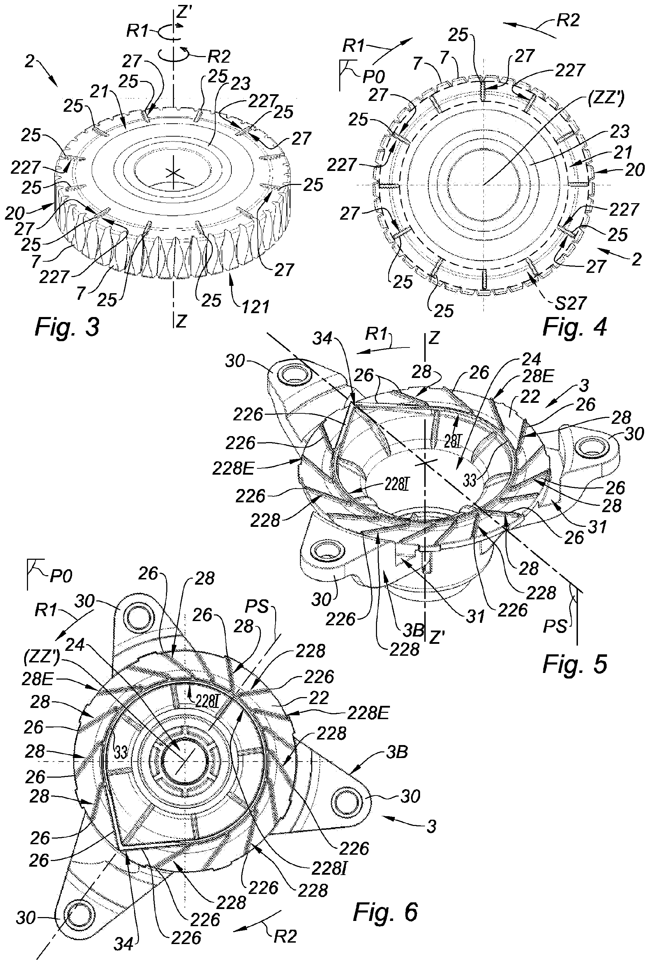

Le premier anneau de balayage S27, dont les limites radiales sont représentée en traits pointillés sur les figures 4 et 7, correspond au disque (fictif) formé par la projection axiale, dans le plan de projection P0, du cylindre (fictif) qui est généré lorsque le premier bord d'attaque 27 de l'aube 25 parcourt un tour complet autour de l'axe de rotation (ZZ').

En d'autres termes, le premier anneau de balayage S27 correspond à la surface totale qui est couverte, dans ledit plan de projection P0, par la trajectoire dudit premier bord d'attaque 27.

Pour permettre l'interaction entre le déflecteur 26 et l'aube 25, et plus particulièrement pour obtenir un cisaillement du lubrifiant entre l'aube 25 et le déflecteur 26 afin de chasser et guider le lubrifiant 4 vers la jante 20, et plus spécifiquement vers la zone d'engrènement 6, la trajectoire de l'aube 25, et plus particulièrement la trajectoire du premier bord d'attaque 27, doit croiser, en projection axiale dans le plan P0, la position (fixe) du ou des déflecteurs 26, et plus particulièrement la position du ou des bords de retenue 28 correspondants.

En d'autres termes, le déflecteur 26 (chaque déflecteur 26), et plus particulièrement son bord de retenue 28, doit empiéter radialement sur le premier anneau de balayage S27, pour se trouver au moins en partie à l'aplomb axial de la trajectoire par laquelle passe le premier bord d'attaque 27.

Outre ce nécessaire chevauchement entre le premier anneau de balayage 27 et le bord de retenue 28 du déflecteur 26, en projection axiale dans le plan P0, il faut agencer le premier bord d'attaque 27 de l'aube 25 et le bord de retenue 28 du déflecteur 26 de telle sorte que, lorsque (et tant que) le premier bord d'attaque 27 survole (chevauche) le bord de retenue 28, ledit bord d'attaque 27 est (et reste) sécant au bord de retenue 28, c'est-à-dire présente une orientation en lacet distincte de celle dudit bord de retenue 28, si bien que le bord d'attaque 27 et le bord de retenue 28 ne sont pas (strictement) superposables, dans le plan de projection P0, et qu'il existe au contraire entre eux un angle d'ouverture θ, dont le sommet (radialement interne) est formé par le point d'intersection M, et qui s'ouvre (s'évase) en direction de la jante 20, tel que cela est illustré sur la figure 7.

Ainsi, en projection dans le plan P0, tel que cela est illustré sur la figure 7, lorsque l'aube 25 tourne dans le premier sens de rotation R1, le premier bord d'attaque 27 aborde le bord de retenue 28 par un point d'entrée dudit bord de retenue 28 qui est situé à une première valeur de rayon, c'est-à-dire à une première distance de l'axe de rotation (ZZ'), dans une zone radialement interne du premier flanc de roue 21.

On désigne par « point d'intersection d'entrée » M_{IN} le point d'intersection M correspondant, par lequel le premier bord d'attaque commence à couper le bord de retenue 28.

Le premier bord d'attaque 27 "remonte" ensuite la rampe formée par le bord de retenue 28, au fur et à mesure que l'aube 25 parcourt en azimut le secteur angulaire couvert par ledit bord de retenue 28, le point d'intersection M se déplaçant dans le sens d'une valeur de rayon croissante, jusqu'à ce que le premier bord d'attaque 27 finisse, lorsque l'aube 25 dépasse le secteur angulaire occupé par le déflecteur 26, par quitter le bord de retenue 28, en un point de sortie dudit bord de retenue 28 qui est situé à une seconde valeur de rayon plus grande que la première valeur de rayon du point d'entrée M_{IN}, à une distance plus éloignée de l'axe de rotation (ZZ'), et donc plus proche de la jante 20.

On désigne par « point d'intersection de sortie » M_{OUT} le second point d'intersection M correspondant à la limite par laquelle le premier bord d'attaque 27 quitte le bord de retenue 28 dans le premier sens de rotation R1.

En projection dans le plan P0, le lubrifiant 4 présent sur le premier flanc de roue 21, dans la zone de balayage S27, est ainsi pris entre deux "raclettes" croisées, ici une raclette fixe formée par le bord de retenue 28 du déflecteur 26, et une raclette mobile formée par le premier bord d'attaque 27 de l'aube 25, dans un espace angulaire dont le sommet, formé par le point d'intersection mobile M, se déplace progressivement selon au moins une composante radiale centrifuge, sous l'effet du mouvement "remontant" des "raclettes", au fur et mesure de la rotation R1 de l'aube 25.

Le lubrifiant 4 est ainsi cisaillé entre lesdites raclettes 27, 28 croisées, et donc progressivement repoussé, au fur et à mesure du déplacement du point d'intersection M, en éloignement radial de l'axe de rotation (ZZ'), jusqu'à la limite radialement externe du bord de retenue 28, et/ou respectivement jusqu'à la limite radialement externe du premier bord d'attaque 27.

On notera par ailleurs que le carter 3 présente de préférence tout autour de l'axe de rotation (ZZ'), à l'exception du secteur angulaire occupé par la zone d'engrènement 6, une paroi latérale 3L, de préférence cylindrique de base circulaire et centrée sur l'axe de rotation (ZZ'), tel que cela est bien visible sur la figure 1.

Ladite paroi latérale 3L se dresse en vis-à-vis de la jante 20, au-delà de la roue 2, et limite l'espace disponible radialement pour le lubrifiant 4 qui circule entre la jante 20 et la paroi latérale 3L.

Ici encore, un tel agencement contribue, au sein du carter 3 fermé, à canaliser le lubrifiant 4 le long de la paroi latérale 3L et à faire converger (en azimut) vers la zone d'engrènement 6, sous l'effet d'entraînement provoqué par la rotation R1 de la roue 2, le lubrifiant 4 préalablement amené au niveau de la jante 20 par le ou les déflecteurs 26.

L'invention permet donc avantageusement de faire recirculer en circuit fermé au sein du carter 3, et vers la zone d'engrènement 6, le lubrifiant 4 "égaré" en-dehors de ladite zone d'engrènement 6.

On notera que l'invention fonctionne parfaitement même pour de faibles vitesses de rotation de la roue 2, notamment pour des vitesses de rotation inférieures à 0,5 tr/min, et ce y compris pour des lubrifiants de viscosité élevée, dans la mesure où la recirculation du lubrifiant 4 résulte au moins en partie, voire essentiellement, du cisaillement mécanique qui s'opère entre l'aube 25 et le déflecteur 26, et ne dépend donc peu voire pas de la génération d'une force centrifuge liée à la seule vitesse de rotation de la roue 2.

On notera également que, bien entendu, les différents agencements et propriétés du ou des déflecteurs 26 peuvent être utilisés aussi bien sur une couronne de couverture 22 à fond plein 22A que sur une couronne de couverture 22 à fond percé d'un orifice de passage 24 tel que décrit plus haut (auquel cas le ou les déflecteurs 26 sont avantageusement disposés autour dudit orifice de passage 24, tel que cela est visible sur la figure 5.

Par ailleurs, lorsque le mécanisme 1 constitue un réducteur à vis sans fin comprenant une vis sans fin 5 qui engrène tangentiellement avec la roue 2, alors la ou les aubes 25 et le ou les déflecteurs 26 seront de préférence agencés et orientés de manière à faire converger le lubrifiant 4 vers la zone d'engrènement 6 où la vis 5 sans fin vient en prise contre la roue 2.

Bien entendu, quelle que soit la nature du mécanisme 1, on prévoira, tel que cela est illustré sur la figure 2, un jeu axial J_{A} suffisant entre l'au moins une aube 25 et l'au moins un déflecteur 26, de manière à permettre à l'aube 25 ou aux aubes 25 de survoler le ou les déflecteurs 26, lors de la rotation R1, sans buter ni frotter contre ces derniers.

A cet effet, ledit jeu axial J_{A} sera de préférence égal ou supérieur à 0,1 mm, éventuellement égal ou supérieur à 0,2 mm.

Si les dimensions du mécanisme 1, et en particulier les dimensions de la roue 2 le permettent voire le nécessitent, le jeu axial J_{A} permettant un fonctionnement sans heurt dudit mécanisme pourra même être choisi égal ou supérieur à 1 mm.

Ceci étant, pour permettre une coopération effective des aubes 25 avec les déflecteurs 26 et donc la mise en œuvre du mouvement d'entraînement du lubrifiant 4 par cisaillement selon l'invention, ledit jeu axial J_{A} devra également être inférieur à un seuil critique qui devra être suffisamment faible pour assurer un passage des aubes 25 « au ras » des déflecteurs 26.

C'est pourquoi le jeu axial J_{A} de fonctionnement qui sépare axialement, le long de l'axe de rotation (ZZ'), l'au moins une aube 25 de l'au moins un déflecteur 26 sera de préférence inférieur ou égal à 1 mm, de préférence inférieur ou égal à 0,5 mm, voire inférieur ou égal à 0,2 mm.

Selon une possibilité préférentielle d'agencement, illustrée sur les figures 1 et 2, le carter 3 comprend d'une part un corps de carter 3A, qui forme autour de l'axe de rotation (ZZ') une chemise présentant une paroi latérale 3L qui entoure la jante 20 de la roue 2, et d'autre part un couvercle de carter 3B qui est (initialement) distinct du corps de carter 3A et sur lequel est formé la couronne de couverture 22, ledit couvercle de carter 3B formant une culasse qui est rapportée et fixée sur le corps de carter 3A.

Le couvercle de carter 3B est de préférence rapporté sur le corps de carter 3A par le dessus, de sorte à couvrir un premier flanc de roue 21 qui forme la face supérieure, éventuellement sensiblement horizontale, de la roue 2, tel que cela est illustré sur les figures 1 et 2.

Selon une possibilité de réalisation préférentielle, et tel que cela a été mentionné plus haut, le couvercle de carter 3B pourra être réalisé dans un matériau plastique (polymère) rigide, de préférence renforcé de fibres, tel qu'un polyamide chargé de fibres de verre, ce qui facilite la fabrication dudit couvercle de carter 3B par moulage et limite le poids dudit couvercle de carter.

Un tel couvercle de carter 3B en plastique pourra de préférence être associé à un corps de carter 3A métallique.

Par ailleurs, selon une variante de réalisation particulièrement préférentielle, le couvercle de carter 3B, de préférence en matériau plastique éventuellement renforcé de fibres, pourra également former, en sus de la couronne de couverture 22, un carter de capteur, qui vient coiffer et protéger un capteur de couple 40, par exemple un capteur de couple magnétique, associé à la colonne de direction 15 et agencé pour mesurer, par exemple par déformation élastique d'une barre de torsion, le couple exercé par le conducteur du véhicule sur le volant de conduite 16, tel que cela est représenté sur la figure 1.

Quelle que soit la variante de couvercle de carter 3B envisagée, la jonction entre le couvercle de carter 3B et le corps de carter 3A est de préférence sensiblement étanche au lubrifiant 4, de sorte à éviter que ledit lubrifiant 4 ne s'échappe hors du carter 3.

Cependant, de façon particulièrement préférentielle, ledit couvercle de carter 3B forme une culasse qui est rapportée et fixée directement en appui axial sur le corps de carter 3A, sans interposition axiale d'un joint compressible du genre joint en élastomère.

En d'autres termes, l'étanchéité au lubrifiant est de préférence assurée intrinsèquement par le simple contact direct du couvercle 3B sur le corps de carter 3A.

Avantageusement, la mise en appui directe, de préférence par un contact de type métal sur métal, ou plastique rigide sur métal, d'une première surface de référence 31 rigide, usinée (rectifiée), du couvercle de carter 3B, première surface de référence 31 qui est de préférence sensiblement annulaire et perpendiculaire à l'axe de rotation (ZZ'), contre une seconde surface de référence 32 conjuguée, rigide, usinée (rectifiée) du corps de carter 3A, permet une mise en position précise et reproductible du couvercle de carter 3B sur le corps de carter 3A, et garantit ainsi, grâce à une prise de référence sur des surfaces de référence 31, 32 rigides et bien contrôlées, la précision et la reproductibilité du jeu axial J_{A}.

L'absence, entre le couvercle de carter 3B et le corps de carter 3A, de tout joint ou de tout autre corps souple en élastomère dont l'écrasement axial serait relativement aléatoire et difficile à contrôler, garantit en effet la reproductibilité de l'assiette (inclinaison angulaire en tangage et en roulis) du couvercle de carter 3B par rapport au corps de carter 3A, ainsi que le degré de rapprochement axial entre ces éléments (et plus particulièrement la profondeur de pénétration axiale du couvercle 3B dans le corps de carter 3A).

Le couvercle de carter 3B pourra avantageusement être pourvu de pattes de fixation 30 permettant la fixation du couvercle de carter 3B sur le corps de carter 3A, de préférence par vissage, tel que cela est illustré sur la figure 2.

Lesdites pattes de fixation 30 seront situées radialement au-delà des déflecteurs 26, et de préférence équiréparties en azimut autour de l'axe de rotation, par exemple à raison de deux pattes de fixation 30 diamétralement opposées (figures 8 à 10) ou de trois pattes de fixation 30 réparties à 120 degrés (figures 5 à 7).

De préférence, les déflecteurs 26, voire la couronne de couverture 22 elle-même, feront saillie axialement, en direction du corps de carter 3A et de la roue 2, par rapport à la première surface de référence 31 du couvercle de carter 3B, de sorte à permettre une pénétration et un centrage de la couronne de couverture 22 à l'intérieur du corps du carter (à l'intérieur de la chemise) 3A.

A cet effet, la couronne de couverture 22 pourra présenter, à la limite radialement externe 28E des déflecteurs 28, une entaille ou un décrochement dont le fond forme la première surface de référence 31 du couvercle 3B et qui sépare les déflecteurs 26 des pattes de fixations 30, tel que cela est bien visible sur la figure 5.

En variante, la couronne de couverture 22 pourra être formée par un cylindre tubulaire formant une protubérance axiale sur le fond (plat) du couvercle 3B, en saillie axiale de la première surface de référence 31, les déflecteurs 26 étant formés en saillie axiale sur le chant dudit cylindre tubulaire, tel que cela est illustré sur les figures 8, 9 et 10.

Comme indiqué précédemment, le couvercle de carter 3B pourra présenter soit un fond plein 22A (figures 8, 9 et 10), soit un fond qui sera percé d'un orifice de passage 24 pour permettre le passage d'un arbre (notamment d'une colonne de direction 15) supportant la roue 2 (figures 2, 5 et 6).

De préférence, tel que cela est illustré sur les figures 1 à 4, l'au moins une aube 25, et le cas échéant toutes les aubes 25, est (sont) formée(s) d'un seul tenant avec le premier flanc de roue 21, sous forme d'une nervure dite « nervure de roue » (respectivement d'une pluralité de nervures de roue) qui fait (font) saillie sur ledit premier flanc de roue 21.

De même, de manière alternative ou complémentaire, et tel que cela est illustré sur les figures 2, 5, 8, 9 et 10, l'au moins un déflecteur 26, et le cas échéant tous les déflecteurs 26, est (sont) formé(s) d'un seul tenant avec le carter 3, sous forme d'une nervure dite « nervure de carter » (respectivement de plusieurs nervures de carter) qui fait (font) saillie sur la couronne de couverture 22.

Avantageusement, la réalisation d'aubes 25 venues de matière avec la roue 2 simplifie la fabrication de la roue 2, par exemple par moulage, et en augmente la robustesse ; respectivement la réalisation de déflecteurs 26 venus de matière avec le carter 3 simplifie la fabrication du carter 3, et plus particulièrement du couvercle de carter 3B, par moulage, et en augmente la robustesse.

De préférence, le premier bord d'attaque 27, et plus globalement l'aube 25, et plus particulièrement la nervure de roue formant ladite aube 25, sera, en projection axiale dans le plan de projection P0, sensiblement rectiligne, et plus particulièrement sensiblement radiale, tel que cela est illustré sur la figure 4.

Une telle configuration rectiligne simplifie la fabrication de la roue 2, et notamment la conception de l'outillage de moulage correspondant.

En outre, tel que cela sera détaillé plus bas, une structure de nervure de roue 25 rectiligne et orientée radialement permet de conférer à une seule et même aube 25, de par une forme sensiblement parallélépipédique, deux bords d'attaque 27, 227 latéraux sensiblement symétriques, un de chaque côté de la nervure, et ainsi de configurer l'aube 25 pour qu'elle puisse fonctionner aussi bien dans le premier sens de rotation R1 que dans un second sens de rotation R2 opposé.

Toutefois, il est également possible de prévoir une ou des aubes 25, et plus particulièrement un ou des premiers bords d'attaque 27 d'une autre forme, notamment courbe, et par exemple elliptique ou bien en développante de cercle.

De même, le ou les déflecteurs 26 pourront présenter une forme sensiblement rectiligne en projection axiale dans le plan de projection P0, ainsi que cela est illustré sur les figures 6 ou 8, ou bien au contraire une forme incurvée, qui, en projection axiale dans le plan de projection P0, converge avantageusement vers, voire aborde de façon tangente, la jante 20 périphérique, tel que cela est illustré sur les figures 9 et 10.

Eventuellement, lesdits déflecteurs 26 pourront adopter une forme elliptique ou en développante de cercle, notamment pour favoriser la progressivité ou la régularité de la recirculation radiale du lubrifiant 4 de l'intérieur vers l'extérieur du flanc de roue 21.

De préférence, tel que cela est illustré sur les figures 1 à 4 et 7, le premier bord d'attaque 27 de l'au moins une aube 25 est orienté selon une direction (sensiblement) radiale par rapport à l'axe de rotation (ZZ') tandis que le bord de retenue 28 de l'au moins un déflecteur 26 est oblique, de sorte à former avec le premier bord d'attaque 27, en projection axiale dans le plan de projection P0, un angle d'ouverture θ compris entre 10 degrés et 85 degrés.

En d'autres termes, le premier bord d'attaque 27, et plus globalement la nervure de roue formant l'aube 25 s'étendra de préférence exclusivement selon une composante radiale (on pourra le cas échéant négliger, en première approximation, l'épaisseur orthoradiale de la nervure de roue, et prendre en considération seulement la direction moyenne d'extension de l'aube 25 ou du bord d'attaque 27), qui pointe vers l'axe de rotation (ZZ'), tandis que le bord de retenue 28 du déflecteur 26 s'étendra à la fois selon une composante radiale et selon une composante orthoradiale, selon une direction globale qui ne passe pas par l'axe de rotation (ZZ').

Le bord de retenue 28 pourra ainsi former, par rapport au premier bord d'attaque 27, une rampe inclinée, dont l'inclinaison correspond à la valeur de l'angle d'ouverture θ, et dont le rayon augmente avec les azimuts croissants dans le premier sens de rotation R1.

Le premier bord d'attaque 27 et le bord de retenue 28 n'étant ainsi pas parallèles, et donc géométriquement non superposables quelle que soit la position azimutale de la roue 2 par rapport au carter 3, le croisement du premier bord d'attaque 27 avec le bord de retenue 28 permettra d'obtenir un effort de cisaillement moteur servant à entraîner le lubrifiant 4 en déplacement, le long de la rampe oblique formée par le bord de retenue 28 du déflecteur 26.

Bien entendu, du fait de la rotation de la roue 2 qui induit un changement progressif de l'orientation en lacet de l'aube 25 par rapport au déflecteur 26, l'angle d'ouverture θ pourra varier, et notamment décroître continûment, entre le point d'intersection d'entrée M_{IN} et point d'intersection de sortie M_{OUT} (lors du passage de l'aube 25 le long d'un seul et même déflecteur 26), tel que cela est visible sur la figure 7.

On pourrait envisager en variante, sans sortir du cadre de l'invention, de disposer des déflecteurs 26 (et plus particulièrement des bords de retenue 28) strictement radiaux sur le carter 3, et des aubes 25 (et plus particulièrement des premiers bords d'attaque 27) obliques sur la roue 2, selon une configuration inversée par rapport à la précédente.

Toutefois, on privilégiera ici la réalisation de déflecteurs 26 obliques et d'aubes radiales 25, c'est-à-dire la réalisation des "raclettes" 26 obliques sur la partie fixe (stator) du mécanisme 1 et de "raclettes" 25 radiales sur la partie mobile (rotor), car une telle configuration permet de rabattre plus facilement et plus directement le lubrifiant 4 en azimut vers un point fixe, c'est-à-dire vers un secteur angulaire fixe prédéterminé, qui correspond ici à la zone d'engrènement 6.

De préférence, tel que cela est notamment visible sur les figures 1, 3 et 4, la roue 2 comporte une pluralité d'aubes 25 sur le premier flanc de roue 21, lesdites aubes 25 étant réparties angulairement autour de l'axe de rotation (ZZ').

La multiplication des aubes 25 permet en effet d'augmenter la fréquence de passage desdites aubes 25 au-dessus de chaque déflecteur 26 pour chaque tour de roue 2, et de multiplier, le cas échéant, le nombre de paires aube/déflecteur travaillant simultanément, autour de l'axe de rotation (ZZ'), à convoyer le lubrifiant 4, ce qui permet d'obtenir un entraînement plus efficace, plus homogène, et plus régulier du lubrifiant 4.

Dans l'exemple de la figure 4, on prévoit ainsi douze aubes 25.

De préférence, les aubes 25 sont réparties autour de l'axe de rotation (ZZ') à des intervalles angulaires sensiblement constants, et, de façon particulièrement préférentielle, sont sensiblement équi-réparties angulairement tout autour dudit axe de rotation (ZZ').

On obtiendra ainsi un entraînement homogène du lubrifiant 5, dès l'entrée en rotation de la roue 2, et ce y compris pour des rotations de faible amplitude angulaire.

De manière alternative ou complémentaire à cette répartition des aubes 25, et pour des raisons analogues, le carter 3 comportera de préférence une pluralité de déflecteurs 26 sur la couronne de couverture 22, par exemple neuf déflecteurs sur un demi-cercle sur la figure 6.

Lesdits déflecteurs 26 seront préférentiellement disposés à intervalles angulaires sensiblement constants, tel que cela est illustré sur les figures 5, 6, 7 et 8, voire équi-répartis angulairement autour de l'axe de rotation (ZZ').

Avantageusement, l'utilisation d'une pluralité d'aubes 25 coopérant avec une pluralité de déflecteurs 28 permet de couvrir un secteur angulaire en azimut particulièrement vaste autour de l'axe de rotation (ZZ'), typiquement de l'ordre de 180 degrés dans le premier sens de rotation R1 (et plus globalement dans chaque sens possible de rotation) sur les figures 6, 7 et 8.

Un tel agencement permet d'une part d'assurer la récupération du lubrifiant 4 sur une grande partie du périmètre de la roue 2, voire tout autour de l'axe de rotation (ZZ'), sans laisser de zone "morte" où s'accumulerait ledit lubrifiant 4, et d'autre par d'assurer un convoyage homogène et continu du lubrifiant 4, sans interruption d'entraînement, jusqu'à la zone d'engrènement 6.

Tel que cela est illustré sur les figures 5 à 8, le ou les bords de retenue 28 du déflecteur 26 ou respectivement des déflecteurs 26 s'étendent, dans le sens d'un éloignement de l'axe de rotation (ZZ'), depuis une limite radialement interne 28I jusqu'à une limite radialement externe 28E, plus éloignée de l'axe de rotation (ZZ') que la limite radialement interne 28I.

La limite radialement interne 28I est de préférence sensiblement circulaire et centrée sur l'axe de rotation (ZZ'), c'est-à-dire que les déflecteurs 26, et plus particulièrement leurs bords de retenue 28, débutent tous sensiblement à une même distance radiale de l'axe de rotation (ZZ').

De même, la limite radialement externe 28E, située au-delà de la limite radialement interne 28I, est de préférence sensiblement circulaire et centrée sur l'axe de rotation (ZZ'), c'est-à-dire que les déflecteurs 26, et plus particulièrement leurs bords de retenue 28, s'achèvent tous sensiblement à une même distance radiale de l'axe de rotation.

De préférence, la limite radialement externe 28E du ou des bords de retenue 28 est située dans une zone (radialement) comprise entre 90 % et 110 % du rayon R20 de la jante 20 de la roue 2 (rayon de jante R20 qui peut correspondre, comme c'est le cas sur la figure 2, au rayon hors-tout de la roue 2), et de préférence entre 95 % et 105 % du rayon R20 de la jante 20.

En d'autres termes, et tel que cela est bien visible sur la figure 2, les bords de retenue 28 s'achèvent sensiblement à l'aplomb axial (ici à la verticale sur la figure 2) de la jante 20 qui forme la limite radiale externe de la roue 2, et donc en particulier sensiblement à l'aplomb axial de la zone d'engrènement 6 au niveau de laquelle la vis sans fin 5 vient en prise sur ladite jante 20.

Cette coïncidence spatiale permet au lubrifiant 4 d'être acheminé, le long de chaque bord de retenue 28, de manière effective depuis la limite radialement interne 28I jusqu'à la limite radialement externe 28E, et donc jusqu'à la circonférence de la roue 2, où ce lubrifiant 4 est utile.

Par ailleurs, selon une caractéristique préférentielle qui peut constituer une invention à part entière, et tel que cela est visible sur les figures 5 à 8, la limite radialement interne 28I du ou des bords de retenue 28 est pourvue d'une nervure centrale 33 annulaire, qui fait saillie axialement sur la couronne de couverture 22 en direction du premier flanc de roue 21, et qui forme un contour fermé autour de l'axe de rotation (ZZ'), de sorte à faire obstacle à la migration centripète du lubrifiant 4 en-deçà de la limite interne 28I du ou des bords de retenue 28 du ou des déflecteurs 26.

Avantageusement, la nervure centrale 33 permet, au moins dans une certaine mesure, de contenir le lubrifiant 4 radialement au-delà de la limite radialement interne 28I des bords de retenue des déflecteurs 26, et plus globalement de maintenir le lubrifiant 4 dans la zone de balayage S27 dans laquelle ledit lubrifiant 4 est récupérable par les couples aubes 25/déflecteurs 26.

La nervure centrale 33 selon l'invention forme en effet une barrière qui intercepte le lubrifiant 4 en provenance de la périphérie de la roue 2 avant que celui-ci ne se rapproche trop de l'axe de rotation (ZZ') et ne quitte ainsi la zone de balayage S27, c'est-à-dire une barrière qui empêche ledit lubrifiant 24 de "tomber" radialement trop près de l'axe de rotation (ZZ').

De préférence, la nervure centrale 33 est sensiblement centrée sur l'axe de rotation (ZZ'), et présente au moins en partie, voire en majorité (ici sensiblement sur trois-quarts de tour en azimut) une forme circulaire autour dudit axe de rotation (ZZ').

De préférence, et tel que cela est bien visible sur les figures 5, 6 et 8, les déflecteurs 26, et plus particulièrement leurs bords de retenue 28, prennent naissance sur (et contre) la nervure centrale 33, qui est avantageusement formée d'un seul tenant avec lesdits déflecteurs 26 (nervures de carter) et avec le carter 3, et plus particulièrement avec le couvercle de carter 3B.

De préférence, la nervure centrale 33, et plus globalement la limite radialement interne 28I des bords de retenue 28 des déflecteurs 26, coïncide sensiblement, en projection axiale dans le plan de projection P0, avec la limite radialement interne des aubes 25, et plus particulièrement avec la limite radialement interne des premiers bords d'attaque 27, c'est-à-dire avec la limite radialement interne de la zone de balayage S27, tel que cela est visible sur la figure 7.

Ainsi, la limite radialement interne 28I des bords de retenue 28 correspond de préférence au rayon du point d'intersection d'entrée M_{IN}.

Avantageusement, grâce à cette superposition des limites internes des organes actifs du graisseur (aubes 25 et déflecteurs 26), les aubes 25 peuvent récupérer efficacement la majorité, voire la totalité du lubrifiant 4 qui s'échappe de la zone d'engrènement 6 en se dirigeant vers l'axe de rotation (ZZ'), ledit lubrifiant 4 étant intercepté et renvoyé vers la jante 20 sitôt que ledit lubrifiant 4 pénètre dans la zone de balayage 27.

De préférence, la roue 2 est apte à tourner autour de l'axe de rotation (ZZ') aussi bien dans le premier sens de rotation R1 que dans un second sens de rotation R2 opposé au premier sens de rotation R1.

L'au moins une aube 25 possède alors de préférence, dans ledit second sens de rotation R2, un second bord d'attaque 227 (situé du côté opposé au premier bord d'attaque 27 associé au premier sens de rotation R1).

La couronne de couverture 22 comprend alors de préférence, tel que cela est notamment visible sur les figures 5, 6, 7, 8, 9 et 10, d'une part au moins un premier déflecteur 26, ou une première série de déflecteurs 26, dont le bord de retenue 28, respectivement les bords de retenue 28, sont agencés de manière à coopérer avec le premier bord d'attaque 27 pour refouler radialement le lubrifiant 4 vers la jante 20 lorsque la roue 2 tourne dans le premier sens de rotation R1, et d'autre part un second déflecteur 226, ou une seconde série de déflecteurs 226, dont le bord de retenue 228, respectivement les bords de retenue 228, sont agencés de manière à coopérer avec le second bord d'attaque 227 pour refouler radialement le lubrifiant 4 vers la jante 20 lorsque la roue 2 tourne dans le second sens de rotation R2.

Avantageusement, la coexistence de deux types de déflecteurs 26, 226 affectés chacun à l'un des sens de rotation R1, R2 possibles permet au dispositif de recirculation de lubrifiant conforme à l'invention de fonctionner quel que soit le sens de rotation R1, R2 de la roue 2 par rapport au carter 3.

On notera que lors de l'inversion du sens de rotation, de R1 à R2, le premier bord d'attaque 27 devient le bord de fuite de l'aube 25 considérée, tandis que bord de fuite initial devient second bord d'attaque 227, et réciproquement.

Bien entendu, toutes les caractéristiques décrites ci-dessus relativement au premier sens de rotation R1 et concernant les aubes 25, le premier bord d'attaque 27, les premiers déflecteurs 26 et leurs bords de retenue 28 peuvent se déduire *mutatis mutandis,* seules ou en combinaisons les unes avec les autres, et relativement au second sens de rotation R2, pour les aubes 25, leur second bord d'attaque 227, les seconds déflecteurs 226 et leurs bords de retenue 228.

En particulier, les seconds bords d'attaque 227 parcourront un anneau de balayage autour de l'axe de rotation (ZZ'), de préférence le même anneau de balayage S27 que les premiers bords d'attaque 27, seront disposés en lacet de façon sécante et non superposable aux (seconds) bords de retenue 228 des seconds déflecteurs 226, de sorte à former, avec ces derniers, en projection axiale dans le plan de projection P0, un angle d'ouverture -θ non nul (négatif par convention, c'est-à-dire de signe opposé à l'angle d'ouverture θ défini entre le premier bord d'attaque 27 et le premier bord de retenue 28 correspondant).

Plus préférentiellement, les seconds bords d'attaque 227 seront de préférence orientés de façon radiale, tandis que les (seconds) bords de retenue 228 des seconds déflecteurs 226 seront préférentiellement placés en oblique.

On notera à ce titre que les aubes 25 sont de préférence formées par des nervures de roue sensiblement parallélépipédiques, préférentiellement radiales, dont une face orthoradiale forme le premier bord d'attaque 27, et la seconde face orthoradiale opposée forme le second bord d'attaque 227, parallèle au premier bord d'attaque 27.

Ceci étant, il est envisageable de prévoir que le second bord d'attaque 227 soit incurvé et/ou oblique.

En pareil cas, les aubes 25 conserveront toutefois de préférence une configuration globalement symétrique et bidirectionnelle, c'est-à-dire que le premier bord d'attaque 27 incurvé d'une aube 25 et le second bord d'attaque incurvé 227 de la même aube 25 seront agencés selon une symétrie plane (notamment par rapport à un rayon issu de l'axe de rotation (ZZ')) ou une symétrie centrale, par exemple selon une forme ovale ou bien une forme en S, de telle sorte que l'aube 25 reste opérationnelle aussi bien dans le premier sens de rotation R1 que dans le second sens de rotation R2.

De préférence, les seconds déflecteurs 226 seront distincts et angulairement distants des premiers déflecteurs 26, et préférentiellement formés d'un seul tenant avec le carter 3 (le couvercle de carter 3B), sous forme de nervures.

De préférence, la limite radialement interne 228I des bords de retenue 228 des seconds déflecteurs 226 se confondra avec la limite radialement interne 28I des bords de retenue 28 des premiers déflecteurs 26.

De même, la limite radialement externe 228E des bords de retenue 228 des seconds déflecteurs 226 se confondra de préférence avec la limite radialement interne externe 28E des bords de retenue 28 des premiers déflecteurs 26.

La nervure centrale 33 formera de même la base (de préférence au moins en partie circulaire) radialement interne des seconds déflecteurs 226.

De préférence, par souci d'efficacité de la recirculation, et par commodité de fabrication, plusieurs voire la totalité des premiers déflecteurs 26 pourront être regroupés dans un secteur angulaire dédié à la récupération du lubrifiant dans le premier sens de rotation R1, et typiquement inférieur ou égal à 180 degrés, tandis que plusieurs voire la totalité des seconds déflecteurs 226 pourront être regroupés dans un autre secteur angulaire séparé, non chevauchant en azimut avec le premier, dédié à la récupération du lubrifiant dans le second sens de rotation R2.

De façon particulièrement préférentielle, tel que cela est bien visible sur les figures 5 à 10, les déflecteurs 26, 226, et plus globalement la couronne de couverture 22 et le couvercle de carter 3B, présentent une symétrie plane (symétrie miroir) par rapport à un plan sagittal PS contenant l'axe de rotation (ZZ').

Les premiers déflecteurs 26 pourront alors avantageusement être regroupés d'un même côté du plan sagittal PS, et plus particulièrement occuper (exclusivement) une première demi-couronne de couverture 22, c'est-à-dire un premier secteur angulaire égal à 180 degrés, autour de l'axe de rotation (ZZ'), tandis que les seconds déflecteurs 226 pourront être regroupés de l'autre côté du plan sagittal PS, de sorte à occuper un second secteur angulaire de même étendue, mais situé de l'autre côté du plan sagittal PS, et de préférence un second secteur angulaire de 180 degrés correspondant à la demi-couronne de couverture 22 complémentaire de la première demi-couronne, tel que cela est illustré sur les figures 5 à 8.

Selon une caractéristique préférentielle qui peut constituer une invention à part entière, la nervure centrale 33 présente un bec 34 qui est formé par la réunion d'un premier déflecteur 26 et d'un second déflecteur 226 qui convergent tous deux vers la jante 20 selon des orientations opposées.

Le sommet du bec 34, qui correspond au point de jonction des déflecteurs 26, 226 sécants, est préférentiellement dirigé en azimut vers la zone d'engrènement 6, et plus particulièrement vers la vis sans fin 5, et pointe radialement vers l'extérieur de la couronne de couverture 22.

De façon particulièrement préférentielle, le sommet du bec 34 se situe sensiblement au rayon correspondant à la limite radialement externe 28E, 228E commune aux différents bords de retenue 28, 228 des déflecteurs 26, 226, c'est-à-dire que la pointe du bec 34 se trouve sensiblement à l'aplomb axial de la jante 20.

La nervure centrale 33 présente ainsi une sorte de pointe en V, dirigée en vers la zone d'engrènement 6, qui permet de forcer la concentration et la convergence du lubrifiant 4 vers ladite zone d'engrènement 6, du fait que ladite nervure centrale 33 rapproche ainsi de la jante 20 la limite radialement interne 28I, 228I dans le secteur angulaire occupé par ladite zone d'engrènement 6.

Tel que cela est illustré sur les figures 5 à 8, la nervure centrale 33 pourra à cet effet présenter par exemple une forme en arc de cercle sur environ trois-quarts de tour autour de l'axe de rotation (ZZ'), couvrant par exemple entre 250 degrés et 290 degrés, et un bec 34 sur le secteur angulaire restant, ici environ 70 degrés à 90 degrés voire 110 degrés (dans le quadrant sud-ouest sur les figures 6 et 7).

Ledit bec 34 correspondra de préférence à la jonction sécante de deux prolongements rectilignes de la nervure centrale 33, qui sont sensiblement tangents aux extrémités de l'arc de cercle susmentionnés.

De préférence, lesdits prolongements matérialisent aussi bien des déflecteurs 26, 226 (et plus particulièrement deux bords de retenue 28, 228) que la limite radialement interne 28I en deçà de laquelle le lubrifiant 4 ne peut pas, ou difficilement, se rendre, du fait de la présence de la nervure centrale 33 qui fait barrage.

De préférence, le bec 34 de la nervure centrale 33 opère une jonction, préférentiellement dans le plan sagittal PS, entre le dernier déflecteur 26 (dans le premier sens de rotation R1) de la première série de déflecteurs 26 et le dernier déflecteur 226 (dans le second sens de rotation R2) de la seconde série de déflecteurs 226, de telle sorte que ledit bec 34 marque ainsi la fin respective desdites première et seconde séries de déflecteurs 26, 226, et donc le point de convergence final de la recirculation du lubrifiant 4, commun aussi bien au premier sens de rotation R1 qu'au second sens de rotation R2.

Selon une possibilité de réalisation, le mécanisme 1 possède, tel que cela est illustré sur les figures 9 et 10 (au moins) un premier déflecteur 26 et (au moins) un second déflecteur 226 qui sont formés d'un seul tenant l'un avec l'autre, sous forme d'une lame de confinement 35 recourbée en « C » dont la face concave 35I (c'est-à-dire le "ventre") est tournée vers l'axe de rotation (ZZ').

La lame de confinement 35 est adossée sensiblement contre la circonférence de la couronne de couverture 22, de préférence de façon quasi-tangente à ladite circonférence et de façon quasi-tangente à la position de la jante 20, la face convexe 35E radialement externe (le "dos") de ladite lame 35 étant orientée radialement vers l'extérieur, et donc vers la paroi latérale 3L du carter 3, et de préférence vers la zone d'engrènement 6.

Avantageusement, une lame de confinement 35 selon l'invention est relativement simple à fabriquer, et permet surtout d'assurer un guidage sans interruption du lubrifiant 4 le long du dos 35E de ladite lame 35, c'est-à-dire le long de la face dorsale 35E convexe et continue de ladite lame 35.

En outre, une telle lame de confinement 35 permet de disposer de déflecteurs 26, 226 qui présentent une importante largeur axiale, ce qui améliore la capacité de récupération et de convoyage du lubrifiant 4 vers la jante 20, puis le maintien, voire le confinement, dudit lubrifiant au dos 35E de la lame, dans l'interstice compris radialement entre ladite lame 35 et la paroi latérale 3L du carter 3, et axialement situé en vis-à-vis de la jante 20.

Comme indiqué précédemment pour le bec 34, l'utilisation d'une lame de confinement 35 qui regroupe deux déflecteurs 26, 226, associés chacun à un sens de rotation R1, R2 différent, permet à la lame 35 d'assurer le convoyage du lubrifiant 4 vers la jante 20 et la zone d'engrènement 6 quel que soit le sens de rotation R1, R2 de la roue 2.

De préférence, la couronne de couverture 22 possèdera deux lames de confinement 35, diamétralement opposées par rapport à l'axe de rotation (ZZ'), et se faisant face en miroir, tel que cela est illustré sur les figure 9 et 10.

Ici encore, la multiplication des lames de confinement 35 permettra d'étendre la capacité du mécanisme 1 à récupérer le lubrifiant 4 et à assurer un convoyage homogène dudit lubrifiant 4, tout autour de l'axe de rotation (ZZ').

L'une de ces deux lames 35 sera avantageusement disposée dans le secteur angulaire correspondant à la zone d'engrènement 6, dos 35E à ladite zone d'engrènement 6 et plus particulièrement dos 35E à la vis sans fin 5.

Selon une variante de réalisation illustrée sur la figure 10, les (deux) lames de confinement 35 pourront être reliées l'une à l'autre par des ponts 36.

Les ponts 36 seront de préférence convexes par rapport à l'axe de rotation (ZZ'), et présenteront de préférence plus globalement des courbures inversées par rapport aux courbures des lames de confinement 35.

La largeur axiale desdits ponts 36 pourra être inférieure à celle, de préférence constante, des lames 35, et en particulier inférieure à la largeur axiale des déflecteurs correspondants 26, 226.

Avantageusement, le fait de prolonger et relier entre elles les lames de confinement 35 par des ponts 36 permettra d'obtenir une structure de déflecteurs 26, 226 en un seul tenant, ininterrompue sur tout le pourtour de l'axe de rotation (ZZ'), ce qui facilitera la réalisation desdits déflecteurs 26, 226 par moulage, et améliorera la rigidité du couvercle de carter 3B, en particulier lorsque les ponts 36 présentent des courbures de signe contraire aux courbures des lames de confinement 35.

Bien entendu, l'invention n'est nullement limitée aux seuls exemples de réalisation susmentionnés, l'homme du métier étant notamment à même d'isoler ou de combiner librement entre elles l'une ou l'autre des caractéristiques décrites dans ce qui précède, ou de leur substituer des équivalents.

Ainsi, en particulier, il n'est pas exclu que le premier flanc de roue 21, pourvu de sa ou de ses aubes 25, forme la face inférieure de la roue 2, tournée en direction de la crémaillère 13, plutôt que la face supérieure, et que la couronne de couverture 22, pourvue de son ou ses déflecteurs 26, 226 soit formée par le fond du corps de carter 3A, situé axialement du côté de la crémaillère de direction 13, à l'opposé du couvercle de carter 3B par rapport à la roue 2.

Selon une variante de réalisation, on pourra même prévoir que la roue 2 soit délimitée axialement d'une part par un premier flanc de roue 21 (ici le flanc supérieur) et d'autre part par un second flanc de roue 121 (ici le flanc inférieur, dont les caractéristiques peuvent se déduire *mutatis mutandis* de celles du premier flanc de roue 21), tel que cela est illustré sur la figure 2, et que chacun desdits premier et second flancs de roue 21, 121 soit pourvu d'aubes 25 selon l'invention, et agencé pour coopérer avec les déflecteurs 26 ménagés respectivement sur une première couronne de couverture 22 supérieure, formée sur le couvercle de carter 3B, et sur une seconde couronne de couverture 122 formée sur le fond du corps de carter 3A.

Selon une telle variante, on disposera avantageusement d'un graisseur double, à deux étages, répartis respectivement sur chacune des deux faces (flancs) 21, 121 opposées de la roue 2.

## Revendications

1. Mécanisme (1) comprenant au moins une roue (2) qui est montée mobile en rotation, selon au moins un premier sens de rotation (R1), autour d'un axe de rotation (ZZ'), dans un carter (3) contenant un lubrifiant (4), tel que de la graisse, ladite roue (2) étant délimitée radialement par une jante périphérique (20) et axialement par au moins un premier flanc de roue (21), annulaire, sécant à l'axe de rotation (ZZ'), et qui borde ladite jante (20), tandis que le carter (3) forme, autour de l'axe de rotation (ZZ') et en vis-à-vis du premier flanc de roue (21), une couronne de couverture (22), annulaire, sécante à l'axe de rotation (ZZ'), et qui chevauche radialement ledit premier flanc de roue (21), ledit mécanisme (1) étant **caractérisé en ce que** la roue (2) comporte au moins une aube (25) qui fait saillie axialement sur le premier flanc de roue (21), en direction de la couronne de couverture (22), tandis que le carter (3) comporte au moins un déflecteur (26) qui fait saillie axialement sur la couronne de couverture (22), en direction du premier flanc de roue (21), l'aube (25) et le déflecteur (26) étant agencés de telle sorte que, en projection dans un plan de projection (P0) normal à l'axe de rotation (ZZ'), l'aube (25) présente, dans le premier sens de rotation (R1), un premier bord d'attaque (27) qui décrit un premier anneau de balayage (S27) autour de l'axe de rotation (ZZ'), tandis que le déflecteur (26) présente un bord de retenue (28) qui s'étend au moins en partie à l'intérieur dudit anneau de balayage (S27) et dont l'orientation en lacet est différente de celle du premier bord d'attaque (27), de telle sorte que, lorsque le premier bord d'attaque (27) de l'aube (25) aborde puis survole le bord de retenue (28) du déflecteur (26) dans le premier sens de rotation (R1), le point d'intersection (M), fictif, entre le premier bord d'attaque (27) et le bord de retenue (28) se déplace radialement vers la jante (20), en s'éloignant progressivement de l'axe de rotation (ZZ'), si bien que le mouvement relatif de la roue (2) par rapport au carter (3) dans le premier sens de rotation (R1) permet à l'aube (25) et au déflecteur (26) de coopérer pour refouler le lubrifiant (4) vers la jante (20) périphérique.

2. Mécanisme selon la revendication 1 **caractérisé en ce que** le jeu axial de fonctionnement (J_{A}) qui sépare axialement, le long de l'axe de rotation (ZZ'), l'au moins une aube (25) de l'au moins un déflecteur (26) est inférieur ou égal à 1 mm, de préférence inférieur ou égal à 0,5 mm, voire inférieur ou égal à 0,2 mm.

3. Mécanisme selon la revendication 1 ou 2 **caractérisé en ce que** l'au moins une aube (25) est formée d'un seul tenant avec le premier flanc de roue (21), sous forme d'une nervure dite « nervure de roue » qui fait saillie sur ledit premier flanc de roue (21) et/ou **en ce que** l'au moins un déflecteur (26) est formé d'un seul tenant avec le carter (3), sous forme d'une nervure dite « nervure de carter » qui fait saillie sur la couronne de couverture (22).

4. Mécanisme selon l'une des revendications précédentes **caractérisé en ce que** le premier bord d'attaque (27) de l'au moins une aube (25) est orienté selon une direction radiale par rapport à l'axe de rotation (ZZ') tandis que le bord de retenue (28) de l'au moins un déflecteur (26) est oblique, de sorte à former avec le premier bord d'attaque (27), en projection axiale dans le plan de projection (P0), un angle d'ouverture (θ) compris entre 10 degrés et 85 degrés.

5. Mécanisme selon l'une des revendications précédentes **caractérisé en ce que** la roue (2) comporte une pluralité d'aubes (25) sur le premier flanc de roue (21), de préférence sensiblement équi-réparties angulairement autour de l'axe de rotation (ZZ'), et/ou **en ce que** le carter (3) comporte une pluralité de déflecteurs (26) sur la couronne de couverture (22), de préférence disposés à intervalles angulaires sensiblement constants autour de l'axe de rotation (ZZ').

6. Mécanisme selon l'une des revendications précédentes **caractérisé en ce que** le ou les bords de retenue (28) du déflecteur (26) ou respectivement des déflecteurs (26) s'étendent, dans le sens d'un éloignement de l'axe de rotation (ZZ'), depuis une limite radialement interne (28I) jusqu'à une limite radialement externe (28E), et **en ce que** la limite radialement externe (28E) du ou des bords de retenue (28) est située dans une zone comprise entre 90 % et 110 % du rayon (R20) de la jante (20) de la roue (2), de préférence entre 95 % et 105 % du rayon (R20) de la jante (20).

7. Mécanisme selon l'une des revendications précédentes **caractérisé en ce que** le ou les bords de retenue (28) du déflecteur (26) ou respectivement des déflecteurs s'étendent, dans le sens d'un éloignement de l'axe de rotation (ZZ'), depuis une limite radialement interne (28I) jusqu'à une limite radialement externe (28E), et **en ce que** la limite radialement interne (28I) du ou des bords de retenue (28) est pourvue d'une nervure centrale annulaire (33), qui fait saillie axialement sur la couronne de couverture (22) en direction du premier flanc de roue (21), et qui forme un contour fermé autour de l'axe de rotation (ZZ'), de sorte à faire obstacle à la migration centripète du lubrifiant (4) en-deçà de la limite interne (28I) du ou des bords de retenue (28) du ou des déflecteurs (26).

8. Mécanisme selon l'une des revendications précédentes **caractérisé en ce que** la roue (2) est apte à tourner autour de l'axe de rotation (ZZ') aussi bien dans le premier sens de rotation (R1) que dans un second sens de rotation (R2) opposé au premier (R1), **en ce que** l'aube (25) possède, dans ledit second sens de rotation (R2), un second bord d'attaque (227), et **en ce que** la couronne de couverture (22) comprend d'une part au moins un premier déflecteur (26), ou une première série de déflecteurs (26), dont le bord de retenue (28), respectivement les bords de retenue (28), sont agencés de manière à coopérer avec le premier bord d'attaque (27) pour refouler radialement le lubrifiant (4) vers la jante (20) lorsque la roue (2) tourne dans le premier sens de rotation (R1), et d'autre part un second déflecteur (226), ou une seconde série de déflecteurs (226), dont le bord de retenue (228), respectivement les bords de retenue (228), sont agencés de manière à coopérer avec le second bord d'attaque (227) pour refouler radialement le lubrifiant (4) vers la jante (20) lorsque la roue (2) tourne dans le second sens de rotation (R2).

9. Mécanisme selon les revendications 7 et 8 **caractérisé en ce que** la nervure centrale (33) présente un bec (34) formé par la réunion d'un premier déflecteur (26) et d'un second déflecteur (226) qui convergent tous deux vers la jante (20) selon des orientations opposées.

10. Mécanisme selon la revendication 8 **caractérisé en ce qu'**il possède un premier déflecteur (26) et un second déflecteur (226) qui sont formés d'un seul tenant l'un avec l'autre, sous forme d'une lame de confinement (35) recourbée en « C » dont la face concave (35I) est tournée vers l'axe de rotation (ZZ').

11. Mécanisme selon l'une des revendications précédentes **caractérisé en ce que** le carter (3) comprend d'une part un corps de carter (3A), qui forme autour de l'axe de rotation (ZZ') une chemise présentant une paroi latérale (3L) qui entoure la jante (20) de la roue (2), et d'autre part un couvercle de carter (3B) qui est distinct du corps de carter (3A) et sur lequel est formé la couronne de couverture (22), ledit couvercle de carter (3B) formant une culasse qui est rapportée et fixée directement en appui axial sur le corps de carter (3A), sans interposition axiale d'un joint compressible du genre joint en élastomère.

12. Mécanisme selon l'une des revendications précédentes **caractérisé en ce qu'**il constitue un réducteur à vis sans fin comprenant une vis sans fin (5) qui engrène tangentiellement avec la roue (2), et **en ce que** la ou les aubes (25) et le ou les déflecteurs (26) sont agencés et orientés de manière à faire converger le lubrifiant (4) vers une zone dite « zone d'engrènement » (6) où la vis sans fin (5) vient en prise contre la roue (2).

## Patentansprüche

1. Mechanismus (1), umfassend mindestens ein Rad (2), das rotatorisch beweglich gemäß mindestens einer ersten Rotationsrichtung (R1) um eine Rotationsachse (ZZ') in einem Gehäuse (3) angebracht ist, das ein Schmiermittel (4) wie Fett enthält, wobei das Rad (2) radial von einer peripheren Felge (20) und axial von mindestens einer ersten ringförmigen Radflanke (21) begrenzt ist, schneidend zur Rotationsachse (ZZ'), und die die Felge (20) säumt, wogegen das Gehäuse (3) um die Rotationsachse (ZZ') und gegenüber der ersten Radflanke (21) einen ringförmigen Abdeckkranz (22) bildet, schneidend zur Rotationsachse (ZZ'), und der die ersten Radflanke (21) radial überlappt, wobei der Mechanismus (1) **dadurch gekennzeichnet ist, dass** das Rad (2) mindestens eine Schaufel (25) aufweist, die axial über die erste Radflanke (21) vorkragt, in Richtung des Abdeckkranzes (22), wogegen das Gehäuse (3) mindestens einen Ablenker (26) aufweist, der axial über den Abdeckkranz (22) vorkragt, in Richtung der ersten Radflanke (21), wobei die Schaufel (25) und der Ablenker (26) derart eingerichtet sind, dass, in Projektion in einer zur Rotationsachse (ZZ') normalen Projektionsebene (P0), die Schaufel (25) in der ersten Rotationsrichtung (R1) einen ersten Angriffsrand (27) aufweist, der einen ersten Abtastring (S27) um die Rotationsachse (ZZ') beschreibt, wogegen der Ablenker (26) einen Halterand (28) aufweist, der sich mindestens zum Teil im Inneren des Abtastrings (S27) erstreckt und dessen Schlingerausrichtung sich von der des ersten Angriffsrands (27) unterscheidet, so dass, wenn der erste Angriffsrand (27) der Schaufel (25) den Halterand (28) des Ablenkers (26) in der ersten Rotationsrichtung (R1) anspricht und dann überstreicht, sich der fiktive Schnittpunkt (M) zwischen dem ersten Angriffsrand (27) und dem Halterand (28) radial zu der Felge (20) verlagert, indem er sich schrittweise von der Rotationsachse (ZZ') entfernt, so dass die relative Bewegung des Rades (2) in Bezug auf das Gehäuse (3) in der ersten Rotationsrichtung (R1) der Schaufel (25) und dem Ablenker (26) gestattet zusammenzuwirken, um das Schmiermittel (4) zu der peripheren Felge (20) zu fördern.

2. Mechanismus nach Anspruch 1, **dadurch gekennzeichnet, dass** das axiale Betriebsspiel (J_{A}), das axial entlang der Rotationsachse (ZZ') die mindestens eine Schaufel (25) von dem mindestens einen Ablenker (26) trennt, kleiner oder gleich 1 mm, vorzugsweise kleiner oder gleich 0,5 mm, sogar kleiner oder gleich 0,2 mm ist.

3. Mechanismus nach Anspruch 1 oder 2, **dadurch gekennzeichnet, dass** die mindestens eine Schaufel (25) zusammenhängend mit der ersten Radflanke (21) in Form einer als "Radrippe" bezeichneten Rippe gebildet ist, die auf die erste Radflanke (21) vorkragt und/oder dass der mindestens eine Ablenker (26) zusammenhängend mit dem Gehäuse (3) in Form einer als "Gehäuserippe" bezeichneten Rippe gebildet ist, die auf den Abdeckkranz (22) vorkragt.

4. Mechanismus nach einem der vorangehenden Ansprüche, **dadurch gekennzeichnet, dass** der erste Angriffsrand (27) der mindestens einen Schaufel (25) gemäß einer radialen Richtung in Bezug auf die Rotationsachse (ZZ') ausgerichtet ist, wogegen der Halterand (28) des mindestens einen Ablenkers (26) schräg ist, so dass mit dem ersten Angriffsrand (27) in axialer Projektion in der Projektionsebene (P0) ein Öffnungswinkel (θ) gebildet wird, der zwischen 10 Grad und 85 Grad liegt.

5. Mechanismus nach einem der vorangehenden Ansprüche, **dadurch gekennzeichnet, dass** das Rad (2) eine Vielzahl von Schaufeln (25) auf der ersten Radflanke (21) aufweist, die vorzugsweise im Wesentlichen gleichmäßig winklig um die Rotationsachse (ZZ') verteilt sind, und/oder dass das Gehäuse (3) eine Vielzahl von Ablenkern (26) auf dem Abdeckkranz (22) aufweist, die vorzugsweise in im Wesentlichen konstanten Winkelintervallen um die Rotationsachse (ZZ') angeordnet sind.

6. Mechanismus nach einem der vorangehenden Ansprüche, **dadurch gekennzeichnet, dass** sich der oder die Halteränder (28) des Ablenkers (26) oder bzw. der Ablenker (26) im Sinn einer Entfernung von der Rotationsachse (ZZ') ab einer radial internen Grenze (28I) bis zu einer radial externen Grenze (28E) erstrecken, und dass sich die radial externe Grenze (28E) des oder der Halteränder (28) in einer Zone befindet, die zwischen 90 % und 110 % vom Radius (R20) der Felge (20) des Rades (2), vorzugsweise zwischen 95 % und 105 % des Radius (R20) der Felge (20) liegt.

7. Mechanismus nach einem der vorangehenden Ansprüche, **dadurch gekennzeichnet, dass** sich der oder die Halteränder (28) des Ablenkers (26) oder bzw. der Ablenker im Sinn einer Entfernung von der Rotationsachse (ZZ') ab einer radial internen Grenze (28I) bis zu einer radial externen Grenze (28E) erstrecken, und dass die radial interne Grenze (28I) des oder der Halteränder (28) mit einer ringförmigen zentralen Rippe (33) ausgestattet ist, die axial auf den Abdeckkranz (22) in Richtung der ersten Radflanke (21) vorkragt, und die eine geschlossene Kontur um die Rotationsachse (ZZ') bildet, so dass die zentripetale Migration des Schmiermittels (4) diesseits der internen Grenze (28I) des oder der Halteränder (28) des oder der Ablenker (26) behindert wird.

8. Mechanismus nach einem der vorangehenden Ansprüche, **dadurch gekennzeichnet, dass** das Rad (2) imstande ist, um die Rotationsachse (ZZ') sowohl in der ersten Rotationsrichtung (R1) als auch in einer zweiten Rotationsrichtung (R2) entgegengesetzt zur ersten (R1) zu drehen, dass die Schaufel (25) in der zweiten Rotationsrichtung (R2) einen zweiten Angriffsrand (227) besitzt, und dass der Abdeckkranz (22) zum einen mindestens einen ersten Ablenker (26) oder eine erste Reihe von Ablenkern (26) umfasst, deren Halterand (28) bzw. Halteränder (28) derart eingerichtet sind, dass er mit dem ersten Angriffsrand (27) zusammenwirkt, um radial das Schmiermittel (4) zu der Felge (20) zu fördern, wenn das Rad (2) in der ersten Rotationsrichtung (R1) dreht, und zum anderen einen zweiten Ablenker (226) oder eine zweite Reihe von Ablenkern (226), deren Halterand (228) bzw. Halteränder (228) derart eingerichtet sind, dass er mit dem zweiten Angriffsrand (227) zusammenwirkt, um radial das Schmiermittel (4) zu der Felge (20) zu fördern, wenn das Rad (2) in der zweiten Rotationsrichtung (R2) dreht.

9. Mechanismus nach den Ansprüchen 7 und 8, **dadurch gekennzeichnet, dass** die zentrale Rippe (33) einen Schnabel (34) aufweist, der durch die Vereinigung eines ersten Ablenkers (26) und eines zweiten Ablenkers (226) gebildet wird, die alle beide zu der Felge (20) gemäß entgegengesetzten Ausrichtungen konvergieren.

10. Mechanismus nach Anspruch 8, **dadurch gekennzeichnet, dass** er einen ersten Ablenker (26) und einen zweiten Ablenker (226) besitzt, die gemeinsam zusammenhängend in Form einer C-förmig gekrümmten Begrenzungslamelle (35) gebildet sind, deren konkave Fläche (351) zu der Rotationsachse (ZZ') zeigt.

11. Mechanismus nach einem der vorangehenden Ansprüche, **dadurch gekennzeichnet, dass** das Gehäuse (3) zum einen einen Gehäusekörper (3A) umfasst, der um die Rotationsachse (ZZ') eine Schürze bildet, die eine Seitenwand (3L) aufweist, die die Felge (20) des Rades (2) umgibt, und zum andern einen Gehäusedeckel (3B), der sich von dem Gehäusekörper (3A) unterscheidet und auf dem der Abdeckkranz (22) gebildet ist, wobei der Gehäusedeckel (3B) einen Verschluss bildet, der direkt in axialer Abstützung auf dem Gehäusekörper (3A) angebracht und befestigt ist, ohne axiale Zwischenlagerung einer komprimierbaren Dichtung der Art Elastomerdichtung.

12. Mechanismus nach einem der vorangehenden Ansprüche, **dadurch gekennzeichnet, dass** er ein Untersetzungsgetriebe mit Schnecke darstellt, umfassend eine Schnecke (5), die tangential in das Rad (2) eingreift, und dass die Schaufel(n) (25) und der oder die Ablenker (26) derart eingerichtet und ausgerichtet sind, dass das Schmiermittel (4) zu einer als "Eingriffszone" (6) bezeichneten Zone konvergiert, wo die Schnecke (5) mit dem Rad (2) in Eingriff kommt.

## Claims

1. A mechanism (1) comprising at least one wheel (2) which is movably mounted in rotation, in at least one first direction of rotation (R1) about an axis of rotation (ZZ'), in a casing (3) containing a lubricant (4), such as grease, said wheel (2) being delimited radially by a peripheral rim (20) and axially by at least one first annular wheel flank (21) secant to the axis of rotation (ZZ'), and which borders said rim (20), while the casing (3) forms, about the axis of rotation (ZZ') and opposite to the first wheel flank (21), an annular cover crown (22), secant to the axis of rotation (ZZ'), and which radially overlaps said first wheel flank (21), said mechanism (1) being **characterized in that** the wheel (2) includes at least one vane (25) which protrudes axially on the first wheel flank (21), towards the cover crown (22), while the casing (3) includes at least one deflector (26) which protrudes axially on the cover crown (22), towards the first wheel flank (21), the vane (25) and the deflector (26) being arranged such that, in projection in a projection plane (P0) normal to the axis of rotation (ZZ'), the vane (25) has, in the first direction of rotation (R1), a first leading edge (27) which describes a first scanning ring (S27) about the axis of rotation (ZZ'), while the deflector (26) has a retaining edge (28) which extends at least partially inside said scanning ring (S27) and whose yaw orientation is different from that of the first leading edge (27), such that, when the first leading edge (27) of the vane (25) approaches then overflies the retaining edge (28) of the deflector (26) in the first direction of rotation (R1), the fictitious intersection point (M) between the first leading edge (27) and the retaining edge (28) is displaced radially towards the rim (20), by gradually moving away from the axis of rotation (ZZ'), so that the relative movement of the wheel (2) relative to the casing (3) in the first direction of rotation (R1) allows the vane (25) and the deflector (26) to cooperate in order to discharge the lubricant (4) towards the peripheral rim (20).

2. The mechanism according to claim 1 **characterized in that** the operation axial clearance (J_{A}) which separates axially, along the axis of rotation (ZZ'), the at least one vane (25) of the at least one deflector (26) is lower than or equal to 1 mm, preferably lower than or equal to 0.5 mm, or even lower than or equal to 0.2 mm.

3. The mechanism according to claim 1 or 2 **characterized in that** the at least one vane (25) is formed in one-piece part with the first wheel flank (21), in the form of a rib called « wheel rib » which protrudes on said first wheel flank (21) and/or **in that** the at least one deflector (26) is formed in one-piece part with the casing (3), in the form of a rib called « casing rib » which protrudes on the cover crown (22).

4. The mechanism according to any of the preceding claims **characterized in that** the first leading edge (27) of the at least one vane (25) is oriented in a radial direction relative to the axis of rotation (ZZ') while the retaining edge (28) of the at least one deflector (26) is oblique, so as to form with the first leading edge (27), in axial projection in the projection plane (P0), an opening angle (θ) comprised between 10 degrees and 85 degrees.

5. The mechanism according to any of the preceding claims **characterized in that** the wheel (2) includes a plurality of vanes (25) on the first wheel flank (21), preferably substantially angularly equally distributed about the axis of rotation (ZZ'), and/or **in that** the casing (3) includes a plurality of deflectors (26) on the cover crown (22), preferably disposed at substantially constant angular intervals about the axis of rotation (ZZ').

6. The mechanism according to any of the preceding claims **characterized in that** the retaining edge(s) (28) of the deflector (26) or respectively deflectors (26) extend, in the direction of a spacing from the axis of rotation (ZZ'), from a radially inner limit (281) to a radially outer limit (28E), and **in that** the radially outer limit (28E) of the retaining edge(s) (28) is located in a zone comprised between 90% and 110% of the radius (R20) of the rim (20) of the wheel (2), preferably between 95% and 105% of the radius (R20) of the rim (20).

7. The mechanism according to any of the preceding claims **characterized in that** the retaining edge(s) (28) of the deflector (26) or respectively deflectors extend, in the direction of a spacing from the axis of rotation (ZZ'), from a radially inner limit (281) to a radially outer limit (28E), and **in that** the radially inner limit (281) of the retaining edge(s) (28) is provided with an annular central rib (33), which protrudes axially on the cover crown (22) towards the first wheel flank (21), and which forms a closed contour about the axis of rotation (ZZ'), so as to hinder the centripetal migration of the lubricant (4) below the inner limit (281) of the retaining edge(s) (28) of the deflector(s) (26).

8. The mechanism according to any of the preceding claims **characterized in that** the wheel (2) is capable of rotating about the axis of rotation (ZZ') both in the first direction of rotation (R1) and in a second direction of rotation (R2) opposite the first direction (R1), **in that** the vane (25) has, in said second direction of rotation (R2), a second leading edge (227), and **in that** the cover crown (22) comprises, on the one hand, at least one first deflector (26), or a first series of deflectors (26), whose retaining edge (28), respectively the retaining edges (28), are arranged so as to cooperate with the first leading edge (27) to radially discharge the lubricant (4) towards the rim (20) when the wheel (2) rotates in the first direction of rotation (R1), and on the other hand, a second deflector (226), or a second series of deflectors (226), whose retaining edge (228), respectively the retaining edges (228), are arranged so as to cooperate with the second leading edge (227) to radially discharge the lubricant (4) towards the rim (20) when the wheel (2) rotates in the second direction of rotation (R2).

9. The mechanism according to claims 7 and 8 **characterized in that** the central rib (33) has a nose (34) formed by the assembly of a first deflector (26) and a second deflector (226) which both converge towards the rim (20) in opposite orientations.

10. The mechanism according to claim 8 **characterized in that** it has a first deflector (26) and a second deflector (226) which are formed in one- piece part with each other, in the form of a containment blade (35) bent into « C » whose concave face (351) is rotated towards the axis of rotation (ZZ').

11. The mechanism according to any of the preceding claims **characterized in that** the casing (3) comprises, on the one hand, a casing body (3A), which forms about the axis of rotation (ZZ') a jacket having a lateral wall (3L) which surrounds the rim (20) of the wheel (2), and on the other hand, a casing cap (3B) which is distinct from the casing body (3A) and on which the cover crown (22) is formed, said casing cap (3B) forming a yoke frame which is attached and directly fastened in axial bearing on the casing body (3A), without axial interposition of a compressible seal of the elastomeric seal kind.

12. The mechanism according to any of the preceding claims **characterized in that** it constitutes a worm screw reducer comprising a worm screw (5) which meshes tangentially with the wheel (2), and **in that** the vane(s) (25) and the deflector(s) (26) are arranged and oriented so as to converge the lubricant (4) towards a zone called « meshing zone » (6) where the worm screw (5) engages against the wheel (2).
